# EUROPEAN PATENT SPECIFICATION

(11) **EP 1 262 580 B1**
(45) Date of publication and mention of the grant of the patent: **19.10.2005**
(21) Application number: 02011908.7
(22) Date of filing: 29.05.2002
(51) Int. Cl.: D01G 9/06, D01G 9/12

(54) **Opening machine and opening method for fibre material**
Öffner und Öffnungsverfahren für Fasermaterial
Ouvreuse et méthode d'ouverture pour matériau fibreux

(30) Priority: 31.05.2001 IT TO20010518
(43) Date of publication of application: 04.12.2002
(73) Proprietor: MARZOLI S.p.A., 25036 Palazzolo Sull'Oglio (Brescia) (IT)
(72) Inventor: Pasini, Giovanni Battista, 25036 Palazzolo Sull'Oglio, (Brescia) (IT); Vezzoli, Emilio, 25036 Palazzolo Sull'Oglio, (Brescia) (IT)
(74) Representative: Fioravanti, Corrado

(56) References cited:
- DE-A- 10 040 533
- FR-A- 1 280 983
- US-A- 3 293 700
- US-A- 4 709 451
- US-A- 5 146 652
- US-A- 5 546 635

## Description

The present invention relates to an opening machine for separating the fibres from intermingled vegetable impurities in cotton tufts, of the type defined in the preamble to Claim 1. The invention also relates to a method of opening cotton tufts and the like.

Conventional opening machines comprise an upper storage bin or supply chamber into which the cotton tufts to be processed are introduced. At the bottom of the storage bin there is an opening cylinder (with prongs, needles or clothing) which cooperates with cleaning blades to split up the fluffy masses of cotton at least partially into their individual constituent fibres, eliminating the intermingled vegetable impurities (parts of leaves, of capsules, of seeds, earth, etc.) therefrom. In the vicinity of the opening cylinder there are usually suction openings for removing the impurities separated from the fibres and a duct through which the impurity-free fibres are removed.

An example of this known technology is provided by US-4858277 or FR-A-1280983.

In conventional opening machines, the material in tufts usually reaches the opening cylinder in the form of a compact mat. When the material is processed in the compacted condition, the opening cylinder cannot achieve good separation of the fibres from the vegetable impurities, unless a clothing having quite "aggressive" characteristics towards the material to be treated is selected for the opening cylinder. However, a clothing of this type brings about the breakage of a considerable quantity of fibres.

An object of the present invention is to provide an opening machine which can eliminate the disadvantages of the prior art discussed above. In particular, it is an object of the invention to provide an opening machine which can bring about improved cleaning efficiency, that is, which can achieve better separation of the vegetable impurities from the fibres, without damaging the fibres.

Another object of the invention is to provide an opening machine which can operate with a shorter working cycle.

These and other objects and advantages which will be understood further from the following are achieved, according to the invention, by an opening machine having the characteristics defined in Claim 1.

According to a further aspect of the invention, a method comprising the steps defined in Claim 15 is proposed.

A preferred but non-limiting embodiment of an opening machine and of an opening method according to the present invention will now be described with reference to the appended drawing, which is a schematic, vertically-sectioned view of an opening machine according to the invention.

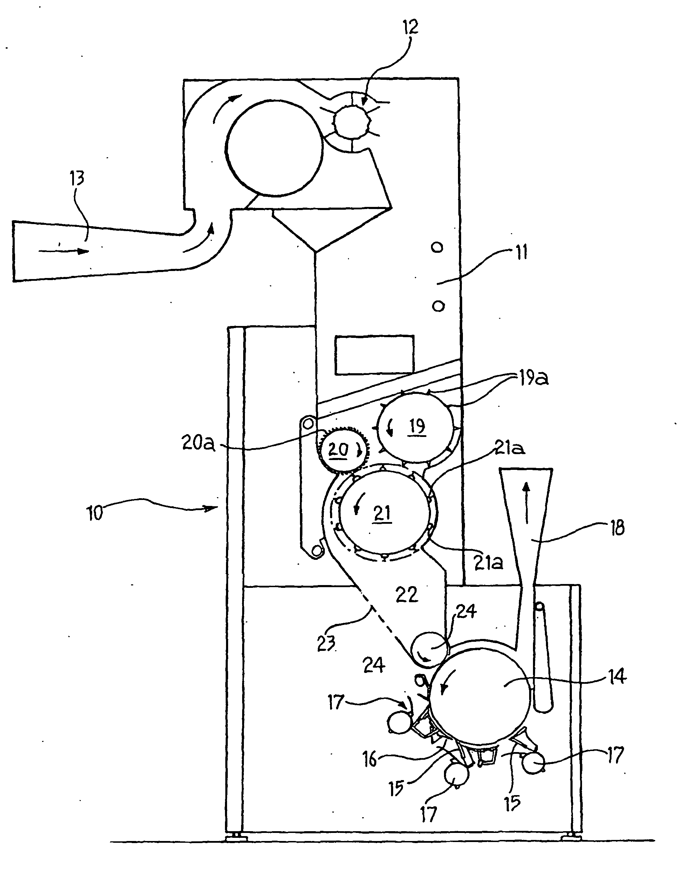

With reference to the drawing, an opening machine according to the present invention is generally indicated 10. The general structure of the opening machine shown in Figure 1 may be considered generally known; only the elements which are of specific importance and interest for the purposes of the implementation of the invention will therefore be described in detail in the following description. For the construction of the parts and of the elements which are not described in detail, reference may therefore be made to any known opening machine.

The opening machine 10 comprises a substantially vertical storage bin 11 in the upper portion of which there is an intake device 12 connected to a duct 13 for the supply of cotton tufts from the exterior.

In the lower portion of the opening machine there is a conventional opening cylinder, indicated 14, associated with conventional cleaning blades 15, carding segments 16 and openings 17 for the suction and removal of the impurities separated from the fibrous portion of the cotton tufts. The fibres, on the other hand, are removed by suction through a duct 18.

An important characteristic of the solution according to the invention is that, in the lower portion of the bin 11 in which the tufts to be processed are stored, there is a set of three rollers which can perform a preliminary opening operation on the tufts and can supply the tufts to the opening cylinder 14 in a controlled manner and in an at least partially-opened and non-compacted condition.

Two feed rollers 19 and 20 are arranged substantially side by side in the lower portion of the storage bin 11 and are rotated in the directions indicated by the arrows in order to withdraw, in a metered manner, the material which is usually in a compacted condition in the base of the storage bin 11, and to supply this material, in a less dense condition, to a pre-opening roller 21.

The feed roller 19 has projecting peripheral elements 19a adapted to force the tufts of material to fall into the passage between the rollers 19 and 20.

The feed roller 20 has an outer clothing 20a which serves to restrain the cotton tufts whilst they are located in the narrow passage between the rollers 20 and 21 and are subjected to a rubbing action by means of elements 21a projecting from the periphery of the pre-opening roller 21. Since the pre-opening roller 21 is rotated at a tangential velocity considerably greater than that of the clothed roller 20 and of the feed roller 19, it brings about, by means of the outer elements 21a, a preliminary or at least partial opening of the tufts which are dragged along by the clothing 20a of the clothed feed roller 20. By way of indication, the feed roller 20 rotates at a tangential velocity of between 1.5 and 4 m/min., whereas the pre-opening roller 21 rotates at a tangential velocity of between about 400 and 600 m/min.

Preferably, a passage having a width of between 0.5 and 2 mm, and most preferably of about 1 mm, is defined between the clothing 20a of the roller 20 and the ends of the elements 21a of the pre-opening roller 21.

The tufts, in a partially-opened condition, are thus thrown by the peripheral elements 21a of the rotating pre-opening roller 21 into an intermediate' supply chamber 22 disposed immediately upstream of the opening cylinder 14 and of a feed roller 24 associated therewith.

It is important to note that the feed roller 24, which is disposed in the lower opening of the intermediate chamber 22, is rotated at a tangential velocity greater than that of the feed rollers 19 and 20 so as to prevent accumulation of material in the intermediate chamber 22. In other words, the material coming from the pre-opening roller 21 reaches the final feed roller 24 in the form of non-compacted tufts. The speed of rotation of the final feed roller 24 is preferably regulated in a manner such as to supply the material to the cylinder 14 with a theoretical delivery rate about 10ö50 times greater, preferably about 30 times greater, than the delivery rate of the feed rollers 19 and 20, or the quantity withdrawn from the base of the bin 11 thereby per unit of time.

Moreover, since the peripheral elements 21a of the pre-opening roller 21 can exert a pumping action on the air, towards the chamber 22, the chamber preferably has a grating or perforated plate 23 which allows the air to escape and thus prevents the formation of undesired excessive air pressure inside the chamber.

The individual partially-opened cotton tufts are then passed from the chamber 22 to the opening cylinder 14 by means of the final feed roller 24. Since the cotton tufts reach the opening cylinder 14 in an already partially-opened condition, the cylinder 14 can advantageously have finer or less aggressive clothings in order to process the cotton tufts more effectively and to separate their fibrous cotton fraction from the impurities without damaging or breaking the fibres.

Naturally, the principle of the invention remaining the same, the details of construction and forms of embodiment may be varied widely with respect to those described and illustrated, without thereby departing from the scope of the invention as defined in the appended claims.

## Claims

1. An opening machine for separating the fibres from intermingled impurities in cotton tufts, of the type comprising:
a storage bin (11) into which cotton tufts to be processed are introduced,
an opening cylinder (14) associated with means (15) for separating the impurities from the fibres and with means (17, 18) for removing the impurities and the fibres, separately, from the opening machine (10),
roller pre-opening means (19, 20, 21) interposed between the storage bin (11) and the opening cylinder (14), the roller pre-opening means comprising a pre-opening roller (21) which can be rotated at controlled speed and which has projecting peripheral elements (21a) suitable for exerting an at least partial opening action on the tufts, and a second roller (20) which is operatively associated with the pre-opening roller (21) and which can be rotated at a controlled tangential velocity, in the same direction of rotation as the pre-opening roller (21), **characterized in that** the second roller (20) is suitable for temporarily restraining and dragging along the tufts with itself to permit at least partial opening of the tufts by means of the peripheral elements (21a) of the pre-opening roller (21), the pre-opening roller (21) being rotated at a tangential velocity greater than that of the second roller (20), in such a way to perform a preliminary opening operation on the tufts and to supply the tufts to the opening cylinder (14), in controlled manner, in an at least partially-opened and non-compacted condition.

2. An opening machine according to Claim 1, **characterized in that** the peripheral elements (21a) are inclined slightly in the direction of rotation of the pre-opening roller (21).

3. An opening machine according to Claim 1 or 2, **characterized in that** the second roller (20) has a clothing (20a) suitable for temporarily restraining the tufts thereon.

4. An opening machine according to Claim 1 or 2, **characterized in that** the second roller (20) is located upstream of the pre-opening roller (21).

5. An opening machine according to Claim 1 or 2, **characterized in that** the pre-opening means further comprise a third feed roller (19), located upstream of the pre-opening roller (21) and beside the second roller (20), in order to cooperate with the second roller (20) in the supply of the tufts from the storage bin (11) to the pre-opening roller (21).

6. An opening machine according to Claim 1, **characterized in that** it comprises a supply chamber (22) located in an intermediate position between the roller pre-opening means (19, 20, 21) and a final feed roller (24) associated with the opening cylinder (14), the supply chamber being suitable for allowing the material to pass through in a non-compacted and partially-opened condition.

7. An opening machine according to Claim 6, **characterized in that**:
the final feed roller (24) which supplies the material withdrawn from the intermediate supply chamber (22) to the opening cylinder (14), and the rollers (19, 20) of the roller pre-opening means (19, 20) which withdraw the material from the storage bin (11),
have dimensions such, and/or are driven in a manner such, as to prevent accumulation of material inside the intermediate chamber (22).

8. An opening machine according to Claim 7, **characterized in that** the final feed roller (24) is arranged to supply the material from the intermediate chamber (22) to the opening cylinder (14) with a delivery rate no less than the amount of material withdrawn from the storage bin (11) by the roller pre-opening means (19, 20) per unit of time.

9. An opening machine according to Claim 8, **characterized in that** the final feed roller (24) is arranged to supply the material from the intermediate chamber (22) to the opening cylinder (14) with a theoretical delivery rate about 10ö50 times greater than the delivery rate of the roller pre-opening means (19, 20), or the quantity of material withdrawn from the storage bin (11) thereby per unit of time.

10. An opening machine according to Claim 6, **characterized in that** the intermediate chamber (22) comprises vent means (23) for eliminating excessive air pressure.

11. An opening machine according to Claim 10, **characterized in that** the vent means comprise a perforated plate or grating (23) defining one of the walls of the intermediate chamber (22).

12. A method of opening cotton tufts and the like which uses an opening machine (10) according to one or more of the preceding claims, **characterized in that** it comprises the steps of:
a) introducing cotton tufts to be processed into a storage bin (11),
b) withdrawing the cotton material from a lower region of the bin (11) by means of at least one feed roller (19, 20) which can be rotated at a controlled tangential velocity,
c) temporarily restraining the tufts and dragging them along by means of said at least one feed roller (19, 20),
d) pre-opening the cotton material dragged along by the feed roller (19, 20), by means of a pre-opening roller (21) operatively associated with the feed roller (20), which is rotated at a tangential velocity greater than that of the feed roller (20) and has projecting peripheral elements (21a) suitable for exerting an at least partial opening action on the tufts,
e) introducing the tufts into an intermediate chamber (22) in an at least partially-opened condition,
f) withdrawing the tufts from the intermediate chamber (22) by means of a final feed roller (24) operatively associated with an opening cylinder (14),
g) opening the tufts by means of the opening cylinder (14), separating the impurities from the fibres, and removing the impurities and the fibres, separately, from the opening machine (10).

13. A method according to Claim 12, **characterized in that** the step f) of the withdrawal of the tufts from the intermediate chamber (22) is achieved by adjustment of the speed of the roller feed means (19, 20) and of the speed of the final feed roller (24) in a manner such as to prevent accumulation of the cotton material in the intermediate chamber (22).

14. A method according to Claim 13, **characterized in that** the final feed roller (24) is rotated in a manner such as to supply the material from the intermediate chamber (22) to the opening cylinder (14) with a theoretical delivery rate about 10ö50 times greater than the delivery rate of the roller pre-opening means (19, 20), or the quantity of material withdrawn from the storage bin (11) thereby per unit of time.

## Patentansprüche

1. Öffnungsmaschine zum Trennen der Fasern von in Baumwollbüscheln eingemischten Verunreinigungen, vom Typ umfassend:
einen Speicherbehälter (11), in den zu behandelnde Baumwollbüschel eingebracht werden,
einen Öffnungszylinder (14), der mit Mitteln (15) zum Abtrennen der Verunreinigungen von den Fasern und mit Mitteln (17, 18) zum getrennten Herausnehmen der Verunreinigungen und der Fasern aus der Öffnungsmaschine (10) verbunden ist,
zwischen dem Speicherbehälter (11) und dem Öffnungszylinder (14) gesetzte Walzen-Voröffnungsmittel (19, 20, 21), wobei die Walzen-Voröffnungsmittel eine Voröffnungswalze (21) umfassen, die mit kontrollierter Geschwindigkeit gedreht werden kann und vorstehende Randelemente (21 a) aufweist, die dafür geeignet sind, eine zumindest teilweise öffnende Wirkung auf die Büschel auszuüben, sowie eine zweite Walze (20), die betriebsfähig mit der Voröffnungswalze (21) verbunden ist und mit einer kontrollierten Tangentialgeschwindigkeit in derselben Drehrichtung wie die Voröffnungswalze (21) gedreht werden kann, **dadurch gekennzeichnet, dass** die zweite Walze (20) dafür geeignet ist, die Büschel zeitweise zurückzuhalten und mit sich zu schleppen, um zumindest ein teilweises Öffnen der Büschel durch die Randelemente (21a) der Voröffnungswalze (21) zu ermöglichen, wobei die Voröffnungswalze (21) mit einer Tangentialgeschwindigkeit, die höher als jene der zweiten Walze (20) ist, solcherart gedreht wird, um an den Büscheln eine vorläufige Öffnungstätigkeit durchzuführen und die Büschel in einem zumindest teilweise geöffneten und nicht verdichteten Zustand in geregelter Weise dem Öffnungszylinder (14) zuzuführen.

2. Öffnungsmaschine gemäß Anspruch 1, **dadurch gekennzeichnet, dass** die Randelemente (21a) leicht in der Drehrichtung der Voröffnungswalze (21) geneigt sind.

3. Öffnungsmaschine gemäß Anspruch 1 oder 2, **dadurch gekennzeichnet, dass** die zweite Walze (20) eine Umhüllung (20a) aufweist, die für das zeitweise Zurückhalten der darauf befindlichen Büschel geeignet ist.

4. Öffnungsmaschine gemäß Anspruch 1 oder 2, **dadurch gekennzeichnet, dass** sich die zweite Walze (20) stromaufwärts von der Voröffnungswalze (21) befindet.

5. Öffnungsmaschine gemäß Anspruch 1 oder 2, **dadurch gekennzeichnet, dass** die Voröffnungsmittel weiters eine dritte Zuführwalze (19) umfassen, die sich stromaufwärts von der Voröffnungswalze (21) und neben der zweiten Walze (20) befindet, um beim Liefern der Büschel vom Speicherbehälter (11) zur Voröffnungswalze (21) mit der zweiten Walze (20) zusammenzuwirken.

6. Öffnungsmaschine gemäß Anspruch 1, **dadurch gekennzeichnet, dass** sie eine Versorgungskammer (22) umfasst, die sich in einer Zwischenposition zwischen den Walzen-Voröffnungsmitteln (19, 20, 21) und einer letzten, mit dem Öffnungszylinder (14) verbundenen Zuführwalze (24) befindet, wobei die Versorgungskammer dafür geeignet ist, ein Durchtreten des Materials in einem nicht verdichteten und teilweise geöffneten Zustand zu ermöglichen.

7. Öffnungsmaschine gemäß Anspruch 6, **dadurch gekennzeichnet, dass**:
die letzte Zuführwalze (24), die das aus der dazwischenliegenden Versorgungskammer (22) entnommene Material zum Öffnungszylinder (14) liefert, und
die Walzen (19, 20) der Walzen-Voröffnungsmittel (19, 20), die das Material aus dem Speicherbehälter (11) entnehmen,
solche Abmessungen aufweisen und/oder in einer solchen Weise angetrieben werden, um eine Anhäufung von Material im Inneren der Zwischenkammer (22) zu verhindern.

8. Öffnungsmaschine gemäß Anspruch 7, **dadurch gekennzeichnet, dass** die letzte Zuführwalze (24) dazu eingerichtet ist, das Material von der Zwischenkammer (22) zum Öffnungszylinder (14) zu liefern, und zwar mit einer Förderleistung, die nicht geringer ist als die Menge an Material, die pro Zeiteinheit von den Walzen-Voröffnungsmitteln (19, 20) aus dem Speicherbehälter (11) entnommen wird.

9. Öffnungsmaschine gemäß Anspruch 8, **dadurch gekennzeichnet, dass** die letzte Zuführwalze (24) dazu eingerichtet ist, das Material von der Zwischenkammer (22) zum Öffnungszylinder (14) zu liefern, und zwar mit einer theoretischen Förderleistung, die etwa 10ö50 Mal größer ist als die Förderleistung der Walzen-Voröffnungsmittel (19, 20) oder die Menge an Material, die dadurch pro Zeiteinheit aus dem Speicherbehälter (11) entnommen wird.

10. Öffnungsmaschine gemäß Anspruch 6, **dadurch gekennzeichnet, dass** die Zwischenkammer (22) Entlüftungsmittel (23) zum Beseitigen eines übermäßigen Luftdrucks umfasst.

11. Öffnungsmaschine gemäß Anspruch 10, **dadurch gekennzeichnet, dass** die Entlüftungsmittel eine perforierte Platte oder ein Gitter (23) umfassen, die bzw. das eine der Wände der Zwischenkammer (22) definiert.

12. Verfahren zum Öffnen von Baumwollbüscheln und dergleichen, bei dem eine Öffnungsmaschine (10) gemäß einem oder mehreren der vorhergehenden Ansprüche verwendet wird, **dadurch gekennzeichnet, dass** es die folgenden Schritte umfasst:
a) das Einbringen von zu behandelnden Baumwollbüscheln in einen Speicherbehälter (11),
b) das Entnehmen des Baumwollmaterials aus einem unteren Bereich des Behälters (11) mittels zumindest einer Zuführwalze (19, 20), die mit einer kontrollierten Tangentialgeschwindigkeit gedreht werden kann,
c) das zeitweise Zurückhalten der Büschel und das Mitschleppen derselben mittels dieser zumindest einen Zuführwalze (19, 20),
d) das Voröffnen des von der Zuführwalze (19, 20) mitgeschleppten Baumwollmaterials mittels einer betriebsfähig mit der Zuführwalze (20) verbundenen Voröffnungswalze (21), die mit einer Tangentialgeschwindigkeit, die höher als jene der Zuführwalze (20) ist, gedreht wird und vorstehende Randelemente (21a) aufweist, die dafür geeignet sind, eine zumindest teilweise öffnende Wirkung auf die Büschel auszuüben,
e) das Einbringen der Büschel in eine Zwischenkammer (22) in einem zumindest teilweise geöffneten Zustand,
f) das Entnehmen der Büschel aus der Zwischenkammer (22) mittels einer letzten, betriebsfähig mit einem Öffnungszylinder (14) verbundenen Zuführwalze (24),
g) das Öffnen der Büschel mittels des Öffnungszylinders (14), das Abtrennen der Verunreinigungen von den Fasern und das getrennte Herausnehmen der Verunreinigungen und der Fasern aus der Öffnungsmaschine (10).

13. Verfahren gemäß Anspruch 12, **dadurch gekennzeichnet, dass** der Schritt f) des Entnehmens der Büschel aus der Zwischenkammer (22) durch eine solche Einstellung der Geschwindigkeit der Walzen-Zuführmittel (19, 20) und der Geschwindigkeit der letzten Zuführwalze (24), um eine Anhäufung des Baumwollmaterials in der Zwischenkammer (22) zu verhindern, erzielt wird.

14. Verfahren gemäß Anspruch 13, **dadurch gekennzeichnet, dass** die letzte Zuführwalze (24) in einer solchen Weise gedreht wird, um das Material von der Zwischenkammer (22) zum Öffnungszylinder (14) zu liefern, und zwar mit einer theoretischen Förderleistung, die etwa 10ö50 Mal größer ist als die Förderleistung der Walzen-Voröffnungsmittel (19, 20) oder die Menge an Material, die dadurch pro Zeiteinheit aus dem Speicherbehälter (11) entnommen wird.

## Revendications

1. Ouvreuse à coton destinée à séparer les fibres des impuretés entremêlées dans des balles de coton, du type comprenant :
une trémie de stockage (11) dans laquelle des balles de coton à traiter sont introduites,
un cylindre d'ouverture (14) associé à un moyen (15) destiné à séparer les impuretés des fibres et à un moyen (17, 18) destiné à retirer séparément les impuretés et les fibres de l'ouvreuse à coton (10),
un moyen de préouverture (19, 20, 21) par rouleau intercalé entre la trémie de stockage (11) et le cylindre d'ouverture (14), le moyen de préouverture par rouleau comprenant un rouleau de préouverture (21) qui peut être mis en rotation à une vitesse contrôlée et qui comporte des éléments périphériques (21 a) faisant saillie appropriés pour exercer une action d'ouverture au moins partielle sur les balles, et un deuxième rouleau (20) qui est associé en fonctionnement avec le rouleau de préouverture (21) et qui peut être mis en rotation à une vitesse tangentielle contrôlée, dans la même direction de rotation que le rouleau de préouverture (21), **caractérisée en ce que** le deuxième rouleau (20) est approprié pour retenir et tirer temporairement les balles par lui-même pour permettre au moins une ouverture partielle des balles à l'aide des éléments périphériques (21a) du rouleau de préouverture (21), le rouleau de préouverture (21) étant mis en rotation à une vitesse tangentielle supérieure à celle du deuxième rouleau (20), de façon à accomplir une opération d'ouverture préliminaire sur les balles et à amener les balles jusqu'au cylindre d'ouverture (14), de manière contrôlée, dans un état au moins partiellement ouvert et non compacté.

2. Ouvreuse à coton selon la revendication 1, **caractérisée en ce que** les éléments périphériques (21 a) sont légèrement inclinés dans la direction de rotation du rouleau de préouverture (21).

3. Ouvreuse à coton selon la revendication 1 ou 2, **caractérisée en ce que** le deuxième rouleau (20) comporte une garniture (20a) appropriée pour retenir temporairement les balles sur celui-ci.

4. Ouvreuse à coton selon la revendication 1 ou 2, **caractérisée en ce que** le deuxième rouleau (20) est situé en amont du rouleau de préouverture (21).

5. Ouvreuse à coton selon la revendication 1 ou 2, **caractérisée en ce que** le moyen de préouverture comprend en outre un troisième rouleau d'alimentation (19), situé en amont du rouleau de préouverture (21) et à côté du deuxième rouleau (20), afin de fonctionner conjointement avec le deuxième rouleau (20) lors de l'amenée des balles depuis la trémie de stockage (11) jusqu'au rouleau de préouverture (21).

6. Ouvreuse à coton selon la revendication 1, **caractérisée en ce qu'**elle comprend une chambre d'amenée (22) située dans une position intermédiaire entre le moyen de préouverture (19, 20, 21) par rouleau et un rouleau d'alimentation final (24) associé au cylindre d'ouverture (14), la chambre d'amenée étant appropriée pour permettre au matériau de passer à travers dans un état non compacté et partiellement ouvert.

7. Ouvreuse à coton selon la revendication 6, **caractérisée en ce que**
le rouleau d'alimentation final (24) qui amène le matériau prélevé de la chambre d'amenée intermédiaire (22) jusqu'au cylindre d'ouverture (14), et
les rouleaux (19, 20) du moyen de préouverture (19, 20) par rouleau qui prélèvent le matériau de la trémie de stockage (11),
ont des dimensions telles, et/ou sont entraînés de manière telle, que cela empêche l'accumulation du matériau à l'intérieur de la chambre intermédiaire (22).

8. Ouvreuse à coton selon la revendication 7, **caractérisée en ce que** le rouleau d'alimentation final (24) est agencé pour amener le matériau de la chambre intermédiaire (22) jusqu'au cylindre d'ouverture (14) avec un débit non inférieur à la quantité de matériau prélevé de la trémie de stockage (11) par les moyens de préouverture (19, 20) par rouleau par unité de temps.

9. Ouvreuse à coton selon la revendication 8, **caractérisée en ce que** le rouleau d'alimentation final (24) est agencé pour amener le matériau depuis la chambre intermédiaire (22) jusqu'au cylindre d'ouverture (14) avec un débit théorique environ 10 à 50 fois supérieur au débit du moyen de préouverture (19, 20) par rouleau, ou la quantité de matériau prélevée de la trémie de stockage (11) de ce fait par unité de temps.

10. Ouvreuse à coton selon la revendication 6, **caractérisée en ce que** la chambre intermédiaire (22) comprend un moyen d'aération (23) destiné à éliminer une pression d'air excessive.

11. Ouvreuse à coton selon la revendication 10, **caractérisée en ce que** le moyen d'aération comprend une plaque perforée ou une grille (23) définissant une des parois de la chambre intermédiaire (22).

12. Procédé d'ouverture de balles de coton et analogues qui utilisent une ouvreuse à coton (10) selon une ou plusieurs des revendications précédentes, **caractérisé en ce qu'**il comprend les étapes consistant à :
a) introduire des balles de coton à traiter dans une trémie de stockage (11),
b) prélever le matériau de coton depuis une région inférieure de la trémie (11) à l'aide d'au moins un rouleau d'alimentation (19, 20) qui peut être mis en rotation à une vitesse tangentielle contrôlée,
c) retenir temporairement les balles et les tirer à l'aide dudit au moins un rouleau d'alimentation (19, 20),
d) préouvrir le matériau de coton tiré par le rouleau d'alimentation (19,20), à l'aide d'un rouleau de préouverture (21) associé en fonctionnement avec le rouleau d'alimentation (20), qui est mis en rotation à une vitesse tangentielle supérieure à celle du rouleau d'alimentation (20) et qui a des éléments périphériques (21 a) faisant saillie appropriés pour exercer une action d'ouverture au moins partielle sur les balles,
e) introduire les balles dans une chambre intermédiaire (22) dans un état au moins partiellement ouvert,
f) prélever les balles de la chambre intermédiaire (22) à l'aide d'un rouleau d'alimentation final (24) associé en fonctionnement à un cylindre d'ouverture (14),
g) ouvrir les balles à l'aide du cylindre d'ouverture (14), séparer les impuretés des fibres, et retirer les impuretés et les fibres, séparément, de l'ouvreuse à coton (10).

13. Procédé selon la revendication 12, **caractérisé en ce que** l'étape f) de prélèvement des balles de la chambre intermédiaire (22) est obtenue par réglage de la vitesse du moyen d'alimentation (19, 20) par rouleau et de la vitesse du rouleau d'alimentation final (24) de façon à empêcher l'accumulation du matériau de coton dans la chambre intermédiaire (22).

14. Procédé selon la revendication 13, **caractérisé en ce que** le rouleau d'alimentation final (24) est mis en rotation de façon à amener le matériau de la chambre intermédiaire (22) jusqu'au cylindre d'ouverture (14) avec un débit théorique environ 10 à 50 fois supérieur au débit du moyen de préouverture (19, 20) par rouleau, ou à la quantité de matériau prélevée de la trémie de stockage (11) de ce fait par unité de temps.
